Europäisches Patentamt

European Patent Office

Office européen des brevets

(11) Publication number: **0 172 540**
**B1**

(12) **EUROPEAN PATENT SPECIFICATION**

(45) Date of publication of patent specification: **18.07.90**

(21) Application number: **85110297.0**

(22) Date of filing: **17.08.85**

(51) Int. Cl.⁵: **G 01 N 21/03, B 29 C 49/00**

(54) Analysis instrument having a blow molded reaction chamber.

(30) Priority: **21.08.84 US 642814**

(43) Date of publication of application:
**26.02.86 Bulletin 86/09**

(45) Publication of the grant of the patent:
**18.07.90 Bulletin 90/29**

(84) Designated Contracting States:
**AT BE CH DE FR GB IT LI LU NL SE**

(56) References cited:
**EP-A-0 070 623**
**AT-B- 308 052**
**CH-A- 402 392**
**DE-A-2 163 590**
**US-A-4 263 256**

(73) Proprietor: **E.I. DU PONT DE NEMOURS AND COMPANY**
**1007 Market Street**
**Wilmington Delaware 19898 (US)**

(72) Inventor: **Howell, Gary Wayne**
**1675 Dixieline Road**
**Elkton Maryland 21921 (US)**

(74) Representative: **von Kreisler, Alek, Dipl.-Chem. et al**
**Deichmannhaus am Hauptbahnhof**
**D-5000 Köln 1 (DE)**

**Description**

The invention relates to an analysis instrument according to the preamble of claim 1 and, in particular, to a chemical analysis instrument in which the reaction chambers, or cuvettes, are formed within the instrument and in which the samples in the reaction chambers are analyzed.

Most of the known instruments used for the chemical analysis utilize reaction chambers, or cuvettes, which have been formed prior to their introduction into the instrument. Such an analysis instrument is known from US—A—4 263 256. To this instrument, a strip of integrally formed reaction chambers is fed in order to analyze samples introduced at a sample introducing means. The reaction chamber strip is formed by heat-forming a strip of transparent thermoplastic material. After a reagent is introduced in a reaction chamber provided with a sample, the thus caused reaction can be monitored through a reaction monitoring device. This device irradiates light which penetrates the reaction chamber and the sample therein so as to be received by a light receiving element. By this, the reaction can be observed. However, chemical analysis of a sample using such preformed chambers has associated with it a relatively high economic cost due to the cost entailed with the prior formation of the chambers.

In the analysis instruments according to US—A—4 263 256, the introduction of the sample liquid under test into the reaction chamber, as well as the addition of the reagent into the sample, occurs at precisely defined points along the chamber's path of travel through the instrument. Moreover, the site at which the reaction is monitored is also precisely fixed along the travel path. Therefore, variations in the sample reaction time cannot accommodate. Alternatively stated, because of the relative inflexibility as to the point of sample introduction, reagent introduction and reaction monitoring, the known analysis instruments are unable to provide an indication of the state of a reaction until a predetermined reaction time has elapsed.

From AT—B—308 052, there is known a preformed reaction chamber chain or strip. The reaction chambers are completely sealed so that the samples and the reagents must be injected into the chambers through needles. Alternatively, in the lid of each chamber, there are provided storage chambers filled with the reagent. In order to introduce the contents of the storage chambers into the reagent chamber, the storage chambers must be pressed down. In each case, introducing the samples and the reagents into the preformed reaction chambers is rather bothersome and when done in an automatic analysis instrument, needs special arrangements.

It is the object of the invention to provide an analysis instrument in which the reaction chamber or cuvette wherein occurs the reaction between a sample under test and the reagent is formed within the analysis instrument itself.

This object is solved by the analysis instrument having the features mentioned in claim 1.

In accordance with the present invention, an analysis instrument comprises a support column having a mold member, preferably in the form of a ring, rotationally mounted thereto. The mold ring has a plurality of indented mold cavities formed on the periphery thereof. A portion of each of the mold cavities is defined by a material transparent to an interrogating radiation. The instrument further includes means for placing a first, inner, and a second, outer, piece of plastic material into superimposed relationship around a predetermined portion of the periphery of the mold ring over a cavity therein as the ring is rotated with respect to the support column. An air jet arrangement directs a jet of heated air at the inner of the plastic pieces as it is drawn onto the ring to soften the same and cause it to deform into close contact with each mold cavity and into a thermally bonded relationship with the transparent portion of the mold cavity. A first, thermal sealing device is provided for securing the inner to the outer piece along an interface that surrounds the deformed portion of the inner sheet so as to define a partially enclosed reaction chamber, or cuvette. The inner and outer pieces of plastic material are spaced apart by a path length that lies within a predetermined close tolerance of a predetermined path length. As a result, in accordance with this invention, low cost, high precision, optical grade reaction chambers may be reproducibly formed in a given mold cavity.

According to a preferred embodiment of the invention, the reagent dispensing arrangement is mounted for movement with respect to the mold ring and is adapted to dispense reagent into the chamber at any selected relative position around the periphery of the mold ring. In addition, the analysis monitoring device, such as a photometer, is rotatably mounted with respect to the mold ring and positionable at any selected position about the periphery of the mold ring to thereby monitor the contents of the reaction chamber at that location on the mold ring.

In a further embodiment of the invention, the second sealing arrangement may be provided at any suitable location with respect to the mold ring to complete the sealed interface between the inner and outer pieces and permit the sanitary disposal of the reaction chambers.

Since according to the invention, the reaction chamber is formed within the analysis instrument itself, an economic advantage is provided in that the cost of prior formation of the chamber is eliminated and thereby, the cost of each unit test is reduced. Furthermore, due to the capability of relatively moving the reagent dispensing arrangement and the reaction monitoring device with respect to the mold member, the analysis instrument permits flexibility with regard to the points or relative times at which sample and reagent are introduced into the sample chamber or cuvette as well as flexibility as to the time (or times) during the reaction at which monitoring of the reaction between the sample and the reagent may be made.

The invention may be more fully understood from the following detailed description thereof taken in connection with the accompanying drawings which form a part of this application and in which:

Figure 1 is a highly stylized schematic representation, in plan, of an analysis instrument embodying the teachings of the present invention;

Figure 2 is an enlarged plan view of a portion of the mold ring shown in Figure 1;

Figure 3 is a side elevation view of the portion of the ring shown in Figure 2;

Figure 4 is a plan view of an analysis instrument in accordance with the present invention;

Figure 5 is a side elevation view taken along section lines 5—5 of Figure 4 showing an instrument in accordance with the present invention;

Figure 6 is a perspective view of the support column of an instrument in accordance with the present invention;

Figures 7 and 8 are, respectively, a side elevation and a plan view of an air jet assembly used in an instrument in accordance with the present invention;

Figures 9 and 10 are, respectively, a side elevation and front elevation view of a heat sealing assembly used in an instrument in accordance with the present invention; and,

Figure 11 is an elevation view of a carrier for a reagent dispensing tube for an instrument in accordance with the present invention.

Throughout the following detailed description, similar reference numerals refer to similar elements and all figures of the drawings.

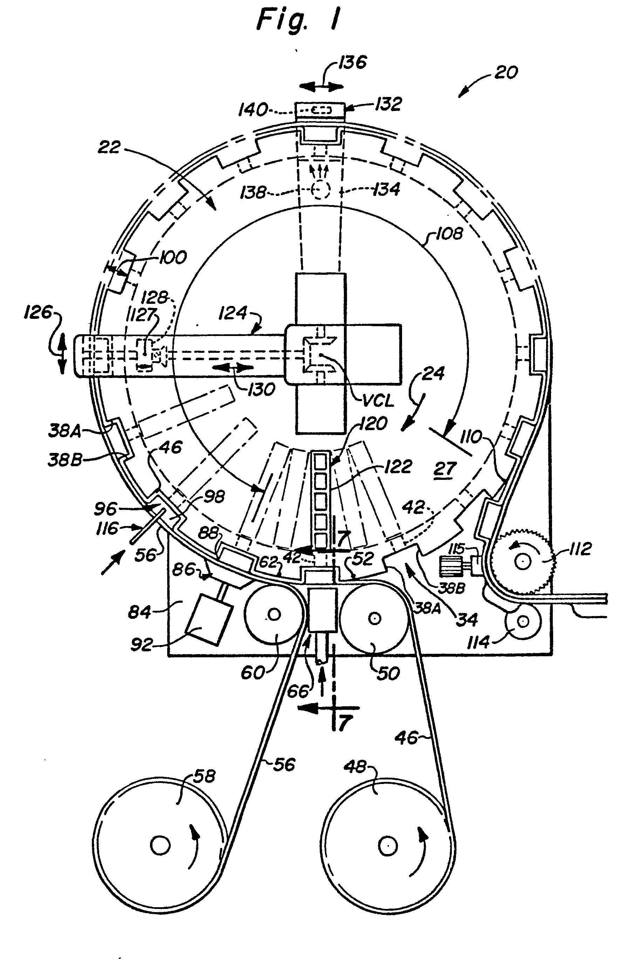

With reference to Figure 1 shown is a highly stylized schematic representation of an analysis instrument generally indicated by reference character 20 in accordance with the present invention. The instrument 20 includes a mold ring generally indicated by reference character 22 mounted for rotational movement by means of an arrangement to be described about a vertical central axis VCL in a predetermined direction indicated by the arrow 24 with respect to a fixed support column, or base, 26 (best shown in Figures 5 and 6).

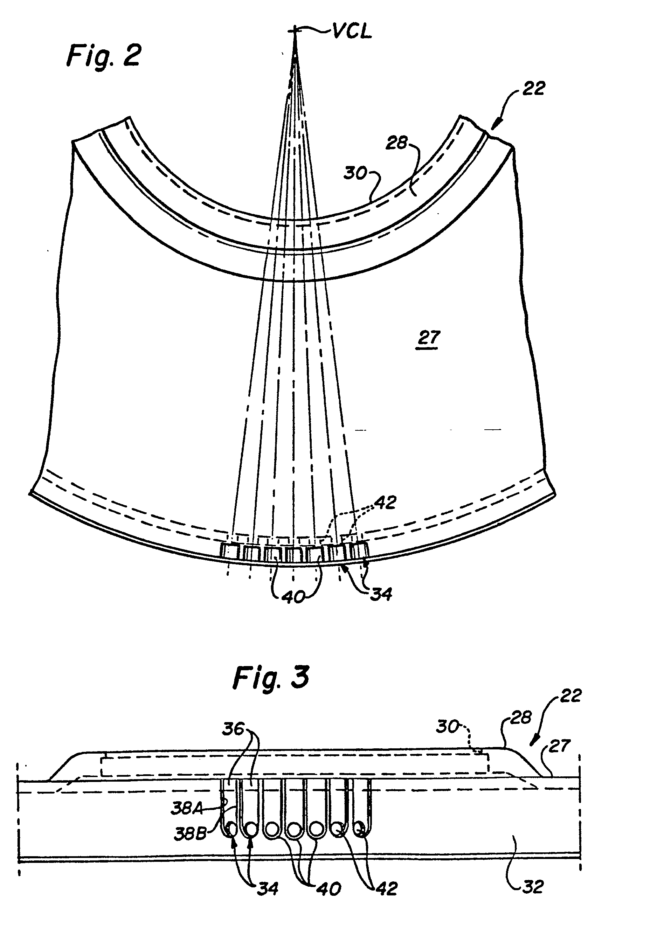

As seen from Figures 1 through 3 the mold ring 22 is a generally circular member that has a planar annular portion 27 and a central upraised region 28 with an opening 30 therein. Of course, the mold member may take any predetermined configuration other than circular, if desired. The ring 22 turns downward at its periphery to define a depending skirt 32. On the periphery of the ring 22 an array of mold cavities 34 is defined by indentations in the skirt 32. Any predetermined number of mold cavities may be indented into the periphery of the mold member. In the preferred embodiment, one hundred fifty cavities are equiangularly arrayed about the periphery of the mold ring 22.

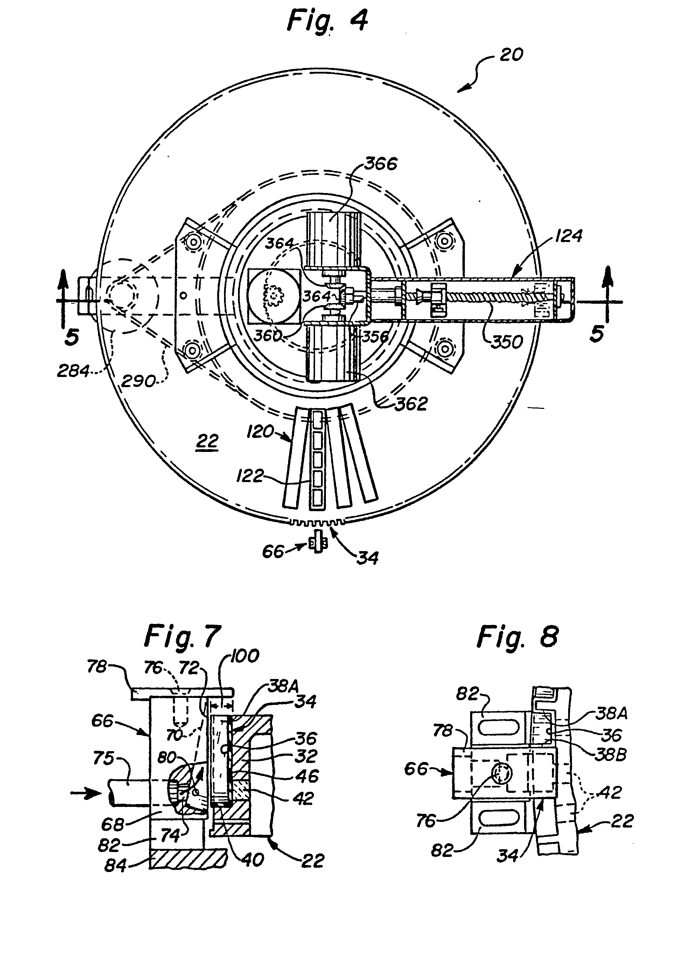

Each mold cavity 34 is formed by a circumferentially extending back wall 36 and confronting radial side walls 38A, 38B. The cavity 34 is closed at its lower end by a circular shelf surface 40. A portion of the back wall 36 of each mold cavity 34 includes a window 42 (perhaps best seen in Figure 7) formed of a material transparent to interrogating radiation. Suitable for use as the window 42 is a clear quartz or plastic material.

Referring again to Figure 1 a first, inner, web or piece 46 of plastic material is drawn from a suitable supply reel 48 and is guided over a guide spool 50 onto the periphery of the mold ring 22 as the same is rotated in the direction of rotation 24 past an inner web application point 52. A second, outer, web or piece 56 of plastic material is guided from a suitable supply reel 58 over a second guide spool 60 and placed onto the mold ring 22 in superimposed relationship with respect to the inner web 46 at an outer web application point 62.

An air jet arrangement 66 (also shown in Figures 7 and 8) is disposed in a predetermined operative position along the mold ring 22 intermediate the web application points 52 and 62. The air jet arrangement 66 is operative to direct a jet of heated air toward the inner web 46 to soften the same. The jet of heated air directed toward the softened portion of the inner web 46 then causes it to deform into a close fitting contact with the mold cavity 34 and to adhere closely to the boundary walls 36, 38A, 38B and 40 of the cavity 34. The inner web 46 is also urged into a thermally bonded contact with the window 42 provided in each cavity 34. Thereafter, a jet of ambient temperature air cools the deformed portion of the inner web 46 while holding it in place.

The definition of the thermal bond between the deformed portion of the inner web and the window 42 serves to precisely locate the inner wall of a reaction chamber to be formed such that precise chambers may be reproducibly formed in a given mold cavity.

With reference to Figures 7 and 8 the air jet arrangement 66 includes a shoe 68 having a contoured hollow 70 formed on the face 72 disposed in confronting relationship to the mold ring 22. The air or gas outlet 74 is provided at the lower end of the hollow 70 and is connected via a conduit 75 to a suitable source of heated and ambient air. Attached to the upper end of the shoe 68 by any suitable means, such as a bolt 76, is a shroud 78. The shroud 78 projects radially inwardly to overhang the mold cavity 34. Heated or ambient air emanates from the outlet 74 and is directed toward the mold cavity 34. The contour of the hollow 70 tapers to maintain fluid pressure as the fluid moves upwardly from the outlet 74. The temperature of the fluid is monitored by a thermocouple 80 provided in the shoe 68. The shoe 68 is mounted by support feet 82 to a mounting plate 84 itself connected to the support column 26 (see also Figure 5).

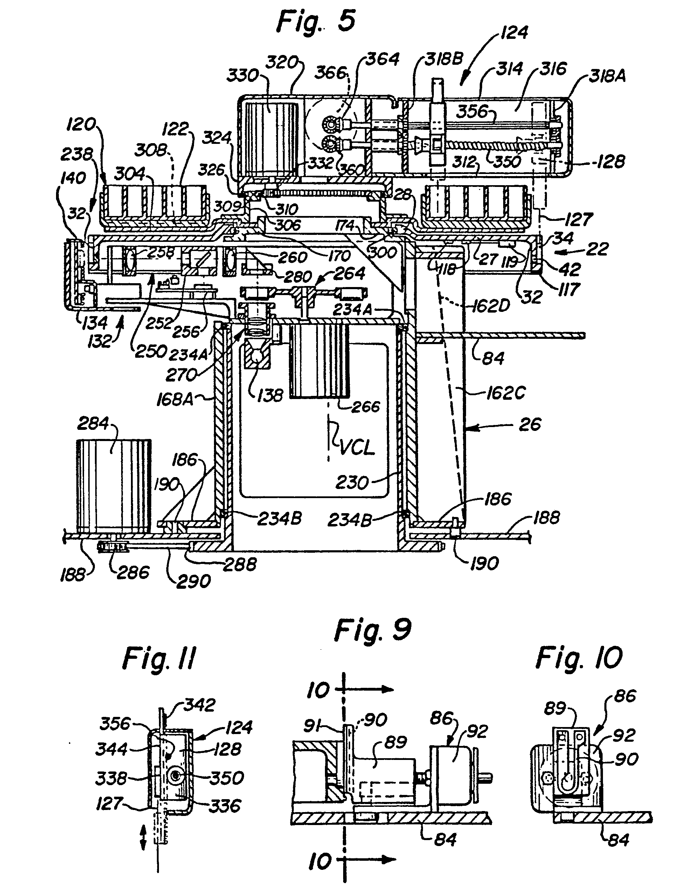

Downstream of the outer web application point 62 a thermal sealing arrangement 86 is mounted to the plate 84 and is provided for sealing the outer web 56 to the inner web 46 along a sealed interface 88. The sealing arrangement 86, which is shown in Figures 9 and 10, takes the form of a resistance heater element although other sealing devices, such as an ultrasonic welding device may be used.

As best seen from Figures 9 and 10 the sealing arrangement 86 includes a block 89 carrying a J-shaped heating element 90. The heating element is covered by a sheath 91 of a nonsticking material, such as that sold by Dodge Industries, Hoosick Falls, New York, under the trademark FLUOROGLAS. The sealing block 89 is moved into and out of contact with the superimposed webs 46 and 56 by an actuator 92.

As a result of the action of the air jet arrangement 66 and the sealing arrangement 86 a sample chamber or cuvette 96 is formed in each mold cavity 34. The reaction chamber 96 defines a partially enclosed sample reaction volume 98 between the deformed inner web 46 and the outer web 56. By "partially enclosed" it is meant that the chamber 96 so formed presents some aperture by which access may be had to the volume 98 defined within the bonded inner and outer webs. The chamber 96 is thus not necessarily a fully closed region but is open at the top to permit access to the volume 98 on the interior thereof to facilitate introduction of sample and reagent, as will be discussed.

Suitable for use as the webs 46 and 56 are any optical grade thermoplastic materials. By "optical grade" it is meant that the web is transparent to interrogating radiation without distortion or significant attenuation, as by defects, fisheyes and aberrations. For example the inner web 46 and outer web 56 are preferably fabricated of heat softenable plastic material such as a material formed from an ionomer resin manufactured and sold by E. I. du Pont de Nemours and Company, Inc. under the trademark SURLYN. The outer web 56 is held in relatively greater tension than the web 46 such that the outer boundary of each chamber 96 is drawn tightly to lie substantially chordal of the mold ring 22. That is, in the plane of Figure 1, the radially outer boundary of the reaction chamber 96 defined by the inner surface of the outer web 56 is a substantially straight line defined between the radial side walls 38A, 38B provided on the periphery of the mold ring 22. As a result of the thermal bonding of the inner web 46 to the window 42 and the chordal relationship of the outer web 56 to the mold ring 22 the reaction chamber 96 so defined exhibits a precise path distance, or path length, 100. The path length 100 lies within a predetermined close tolerance (typically one percent) of a predetermined path distance (typically 0.198 inch (1 inch=25,4 mm)). In accordance with this invention such precisely formed reaction chambers may be repeatedly and reproducibly formed in any given mold cavity 34.

Of course, any other suitable materials may be used for the inner and outer webs and remain within the contemplation of the present invention. For example, the inner and outer webs may be sliced from a common stock and folded. Alternatively, the webs 46 and 56 may be fabricated from a laminate of nylon (as the exterior ply) and the above-cited ionomeric material as the interior ply.

The strip of adjacent chambers formed in the manner outlined above is trained about the periphery of the mold ring 22 for a predetermined angular distance 108 defined between the application point 52 and a take-off point 110. The strip is removed from the mold ring 22 in the vicinity of the take-off point 110 by the action of a take-off capstan wheel 112. A follower 114 is biased into contact with the capstan 112. The capstan 112 is driven by a drive motor (not shown) which is mounted in a driving relationship to the wheel 112 beneath the mounting plate 84. In the preferred embodiment of the invention it is the action of the capstan wheel 112 that supplies the motive energy for rotation of the mold ring 22 about the vertical center line VCL ring 22 in the direction 24. This action serves to precisely displace each reaction chamber to any predetermined angular location (within the angular range 108) with respect to the axis of rotation VCL. Of course any suitable drive arrangement for rotating the mold ring 22 may be used provided adequate tension is maintained in the webs 46, 56.

If desired, at any predetermined point along the circumference of the ring 22 or the path of the strip toward the wheel 112 a closure device 115 may be mounted to the plate 84 to seal the open top of the chamber 96 to facilitate sanitary disposal. In Figure 1, the closure device 115 is provided intermediate the follower 114 and the take-up wheel 112.

Located at any predetermined angular location downstream of the sealing assembly 86 is a sample inject mechanism 116 adapted to introduce a sample of material under test, typically the body liquid of a patient, into the open top of the chamber 96 formed as described above. Any suitable sample inject mechanism may be used.

To maintain the proper reaction temperature the ring 22 may be heated and maintained at a suitable temperature by heating arrangement. The heating arrangement in the preferred case takes the form of an annular resistance heater ring 117 (Figure 5) disposed on the undersurface of the depending skirt 32. The ring 117 is supplied current by an array of slip rings 118 carried on the undersurface of the mold ring 22 (Figure 5). A suitable controller 119 is also provided. Heating the reaction mixture by conduction in this manner is believed advantageous because it minimizes air movement around the top of the reaction chamber 96 and thus minimizes evaporation.

The upper surface of the planar annular portion 27 of the mold ring 22 carries a reagent supply arrangement 120 having an array of reagent containers 122 disposed in substantially radial directions from the vertical center of rotation VCL of the ring 22. The reagent containers 122 may be refrigerated or cooled, if desired, as is discussed herein.

A reagent supply arm 124 is mounted with respect to the mold ring 22 for relative rotational movement with respect thereto in the direction of the double arrow 126 to provide the capability to randomly dispose the arm 124 at any selected angular location about the axis VCL. As best seen in Figures 4, 5 and 11 the reagent supply arm 124 includes a reagent dispensing tube, typically a supply needle, 127 carried by a carrier 128. The dispensing tube 127 is movable in substantially radially inward or radially outward directions 130 with respect to the mold ring 22 to efficiently and effectively aspirate a selected reagent from any one of the segmented portions of the containers 122 and to deposit the same into one of the fully formed chambers 96 disposed at any angular position within the predetermined range 108 of angular distances arranged about the periphery of the mold ring 22. Due to the flexibility of the reagent introduction provided by the structure above described the instrument 20 in accordance with the present invention contemplates the possibility, among others discussed herein, of sample initiated reactions. That is, the appropriate reagent may be introduced into a selected chamber 96 prior to the introduction of a sample into that chamber (i.e., at a point "upstream" of the sample inject mechanism 116 intermediate that mechanism and the sealing assembly 86). Thus, the introduction of the sample would serve to initiate the reaction with the reagent.

A reaction monitoring device 132, such as a photometer, is mounted in a support arm 134 disposed beneath the mold ring 22 and mounted for independent rotational movement in the direction of the double arrows 136 with respect thereto. The arm 134 brackets the skirt portion 32 of the mold ring 22 at both the radially inward and radially outward sides thereof.

The monitoring device 132 includes a source of interrogating radiation indicated diagrammatically in Figure 1 at 138 which is mounted in the arm 134 at a point radially inward of the skirt 32 formed in the mold ring 22. A radiation detector diagrammatically in Figure 1 indicated at 140, is mounted in the support arm 134 radially outward of the skirt 32. Of course, these relative locations of the source 138 and detector 140 may be reversed. Moreover, the invention also contemplates the use of a grating photometer as the monitoring device. Such a photometer includes a source of interrogating radiation which is directed through the chamber 96 and the window 42 to a diffusion grating which separates the radiation incident thereon into its component wavelengths. These components are directed to the detector. Any convenient relative radial positioning of these elements may be used.

Because of the described constructional relationship the instrument 20 in accordance with the present invention is capable of monitoring the reaction occurring in any chamber 96 disposed at any predetermined point on the mold ring 22 along the predetermined angular distance 108. As a consequence a reaction may be observed throughout its cycle and not merely at a time when the reaction chamber reaches a fixed observation point. As will be seen the particular construction of the support column 26 and the mounting of the monitoring device to the instrument serves to limit the range of angular positions at which the monitoring device is positionable. However, other alternate constructions and/or mounting arrangements may be used whereby the monitoring device is positionable at any predetermined position along the circumference of the ring 22. Furthermore, it should be noted that the positions of either the reagent supply 120 and/or the monitoring device 132 may be altered to other convenient positions.

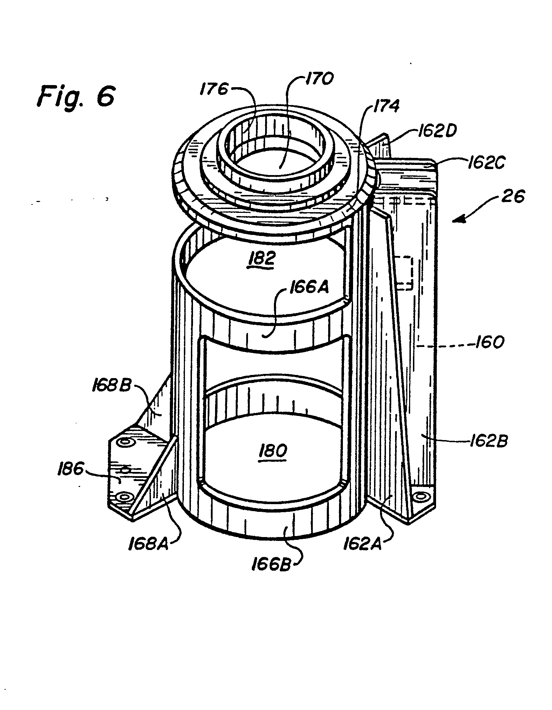

A more detailed constructional description of the invention may be understood with reference to Figures 4, 5 and 6. The instrument 20 includes a support base or column 26 (Figures 5, 6) in the form of a generally cylindrical cast member. The column 26 has a spine portion 160 formed with four vertically adjacent splines 162A through 162D. From the spine 160 upper and lower cylindrical bands 166A and 166B respectively extend horizontally. Vertically extending supports 168A and 168B interconnect the bands 166 and impart structural rigidity to the same. The spine 160 extends vertically above the upper band 166A and supports in cantilevered relationship a cap 170. The cap 170 has a stepped portion 174 about its periphery. The cap 170 has an access opening 176 formed therein that communicates with the hollow cylindrical central region 180 of the support column 26. The peripheral edges of the stepped portion 174 of the cap 170 and the upper band 166A cooperate to define a substantially circumferentially extending space 182 that extends angularly for a distance encompassing the angular distance 108 between the two angularly outward edges of the spine 160. The support plate 84 projects outwardly in a substantially horizontal orientation from the spine 160. As noted, the plate 84 forms the base support for the air jet arrangement 66 (Figures 7 and 8) the rollers 50 and 60, and the sealing arrangement 92, 86 (Figures 10 and 11), the capstan 112 and the wheel 114, and the second sealing arrangement 115. A planar mounting flange 186 is connected to the lower surface of the spine 160 and of the struts 168 and is secured by any suitable means of attachment to the structural framework 188 of the instrument as shown at 190.

The reaction monitoring device 132 is disposed within the central region 180 of the support column 26. This device includes a substantially cylindrical barrel portion 230 which is mounted for rotational movement on upper and lower bearings 234A and 234B, respectively. Extending radially outwardly from the barrel portion 230 is the support arm 134. The support arm 134 is grooved, as at 238, near the outward end thereof. The detector 140 and associated amplification electronics is housed in the radially outer end of the arm 134. An optics module 250 is removably supported in the major portion of the arm 134 located radially inwardly of the groove 238. The optics module 250 includes a beam splitter 252 and a reference transducer 256 and associated amplification electronics. Focusing lenses 258 and 260 are housed in the arm 134 to concentrate radiation passing through the beam splitter 252 and direct the same through the window 42 and the chamber 96 to the detector 140.

Mounted within the barrel portion 230 of the photometer 132 is a filter wheel assembly 264 driven by a suitable drive motor 266. The source 138 of interrogating radiation is also mounted within the barrel 230 proximal to the filter wheel 264. Interrogating radiation from the source 138 passes through a focusing lens arrangement 270, through a selected filter in the wheel 264 and is directed by a mirror 280 toward the optics module 250. Appropriate control electronics are also disposed in the barrel 230.

Motive energy for the rotation of the photometer assembly 96 with respect to the support column 230 is provided by a drive motor 284 mounted to any convenient location within the housing of the instrument. A drive gear 286 connected to the shaft of the motor 284. The motor 284 is interconnected to a circle gear 288 affixed to the exterior of the photometer barrel 230 by a belt 290. Accordingly, rotation of the motor 284 in an appropriate angular direction rotates the photometer with respect to the support column 26 and thereby positions the photometer arm 134 at any angular location along the portion 108 of the circumference of the mold ring 22.

The mold ring 22 is mounted for rotational movement on a bearing arrangement 300 disposed between the upraised central region 28 of the ring 22 and the step 174 of the cap portion 170 of the column 26.

The reagent supply arrangement 120 includes an annular planar tray 304 having a central post 306. The individual reagent containers 122 are supported on the tray 304. The tray 304 is fabricated of a heat conductive material, such as aluminum, and is provided with a labyrinth array of coolant passages 308. Coolant liquid may be pumped through the passages 308 to maintain reagents in the container 122 at a predetermined desired temperature. The tray 304 is supported away from the surface of the ring 22 and a layer of a suitable thermal insulation (not shown) may be disposed between the tray 304 and the ring 22.

The foot of the post 306 is secured to the cap 170 of the support column 26 by any suitable mounting arrangement which nonrotatably secures the tray 304 with respect to the column 26. The post 306 at its upper end is provided with a central opening 309 on which is disposed a circular gear 310.

The reagent supply arm 124 includes a base plate 312 and a cover plate 314. The plates 312 and 314 are spaced apart to define an enclosed region 316. The arm 124 has upstanding end plates 318A and 318B mounted therein. The inner end of the arm 124 is connected to a hub 320 having a downwardly projecting flange 324. The supply arm 124 is rotationally mounted with respect to the base 26 by means of a bearing assembly 326 provided between the radially inner surface of the flange 324 and the radially outer surface of the post 306.

Motive force for the rotation of the supply arm 124 with respect to the support column 26 is provided by a stepper motor 330 mounted in the hub 320. The shaft of the motor 330 provides downwardly from the hub 320 and is provided with a pinion 332 which engages the circular gear 310 mounted to the post 306.

As seen in Figure 11 the reagent dispensing tube 128 further includes a carrier block 336 having a shoe 338 which supports the dispensing tube 127. A gear rack 342 attached to the shoe 338 rides in tracks 344 provided in the block 336. The reagent needle block 336 is movable radially with respect to the arm 124 on a spiral gear shaft 350 and a splined shaft 356 which are each respectively rotationally mounted between the end plates 318A and 318B. The spiral shaft 350 is mounted to the block 336 while the splined shaft 356 is engagable with the gear rack 342 affixed to the block. The shaft 350 is connected at its radially inner end via a bevel gear 360 to a first drive motor 362 (Figure 4). The action of the motor 362 serves to displace the needle block assembly 336 radially outward or radially inward. The splined shaft 356 is connected via a bevel gear 364 to a second drive motor 366. Vertical movement of the needle 126 (once the needle block 336 is radially positioned in a predetermined location) is afforded by the vertical drive motor 366 connected to the splined shaft 356.

In operation, superimposed plastic leader strips from the inner and outer web supply reels are trained over the respective spools 50 and 60, around the periphery of the mold 22, about the capstan wheel 112 and the back-up wheel 114. Rotation of the capstan wheel 112 provides the motive energy for rotation of the ring 22 and the advancement of the chamber 96 formed in the manner discussed in the direction of travel 24. A jet of heated air from the air jet arrangement 66 softens the inner web 46 and forces the softened material of the inner web 46 into intimate contact with the boundaries of the mold cavity 34 then in proximity to the air jet arrangement. The inner web 46 takes the form of the mold cavity 34 with the web being disposed in thermally bonded relationship with the window portion 42 of the cavity 34. The tapered surface 70 of the shoe 68 maintains sufficient pressure on the web 46 to force the same completely into the cavity 34.

Rotation of the mold ring 22 in the direction 24 displaces the mold cavities 34 lined with the inner web 46 past the outer web application point 62 whereat the outer web 56 is placed thereover in radially superimposed relationship. Continued rotation of the ring 22 places the superimposed webs 46 and 56 in the vicinity of the sealing arrangement 86. This arrangement 86 is advanced radially inward by action of the actuator 92 to contact the webs and thermally bond the same together. Due to the shape of the heating element 90 the webs are bonded along a substantially J-shape. The webs are further joined as the next-successive cavity 34 is brought into position with respect to the heating element 90. Thus, the vertical edge of the interface left open by the first-discussed heating is closed by the elongated leg of the J-shaped heater during the next successive heating. This action prevents repeated heat sealing along the same portion of the interface. In any event, as a result of the action of the sealing arrangement 86 the inner and outer webs are sealed along an interface 88 that serves to define a partially enclosed chamber 96 in the cavity 34. In accordance with the preferred embodiment of this invention the chambers 96 are accessible from directly vertically thereabove.

As the mold ring 22 is advanced the chambers 96 are provided with sample from the sample inject mechanism 116 and reagent via the reagent dispensing arrangement 120. It is noted that due to the ability of the reagent dispensing arrangement 120 to rotate over the entire circumference of the ring 22 reagent may be introduced into a chamber 96 prior to the point at which a sample is injected thereinto. Thus, a sample-initiated reaction may be provided by the instrument 20 in accordance with the present invention. Since the mold ring 22 is heated by the action of heating element 117 the correct temperature for the desired chemical reaction is maintained.

The reactions occurring in each chamber 96 may be monitored at any position within the predetermined angular range 108 by the monitoring device 132. Since the monitoring device is rotatably movable under the circumference of the ring 22 (save for that angular distance occupied by the spine 160 of the support column) the monitoring device 132 can be used to observe the reaction in a chamber 96 throughout the entire reaction cycle, not merely at a fixed point. Further, when coupled with the flexibility of reagent introduction imparted by the dispensing means above described, it is possible to monitor a chamber in blank (i.e., with no sample or reagent), a chamber with sample only (i.e., prior to sample introduction), a chamber with reagent only (a "reagent blank"), or a chamber with sample and reagent.

When the strip of chamber is stripped from the mold ring 22 the closure device 115 serves to fully enclose each chamber 96 to prevent runoff of reaction mixture and permit sanitary disposal thereof.

In view of the foregoing those skilled in the art may readily appreciate that an analysis instrument in accordance with the present invention is adapted to provide precise production on-board the mold member of optical grade reaction chambers, or cuvettes, at a low cost. Further, the instrument provides the capability for accurately transporting and maintaining the temperature of the reaction chambers so formed, for selectively positioning a reaction monitoring device and/or a reagent introducing device at any predetermined position with respect to the mold member, and for disposing of the chambers in a sanitary manner.

Those skilled in the art, having benefit of the teachings hereinabove set forth, may effect numerous modifications thereto lying within the scope of the present invention, as set forth in the appended claims.

**Claims**

1. Analysis instrument comprising
— sample introducing means (116) for introducing samples under test into reaction chambers (96) integrally formed from a material transparent to interrogating radiation,
— a reagent dispensing arrangement (124) for dispensing a reagent into the reaction chambers (96), and
— a reaction monitoring device (132) for monitoring the reaction within a reaction chamber (96) by means of interrogating radiation, characterized by
— a movable mold member (22) having a plurality of mold cavities (34), a portion (42) of each mold cavity (34) being defined by a material transparent to the interrogating radiation and penetrated by the interrogating radiation for monitoring a reaction,
— a placing means (50, 60) for placing over the mold cavities (34) an inner (46) and an outer (56) length of plastic material being transparent to the interrogating radiation,
— a deforming means (66) for deforming the inner length (46) of plastic material into close contact with the boundaries of a mold cavity (34) and into bonded relationship with the transparent portion (42) thereof, with the inner (46) and outer (56) lengths of said plastic material being spaced apart by a distance (100) lying within a predetermined close tolerance of a predetermined distance, and
— a first sealing arrangement (86) for joining the inner (46) and the outer (56) lengths together to define the reaction chambers (96) therebetween.

2. Analysis instrument according to claim 1, characterized in that
— the mold member consists of a mold ring (22),
— the placing means (50, 60) are arranged to draw an inner (46) and an outer (56) length of plastic material into superimposed relationship over the mold cavity (34) around a predetermined portion of the mold ring (22),
— the deforming means consist of an air jet arrangement (66) for directing a jet of heated air at the inner end of the lengths (46) to soften the same and cause it to deform into close contact with the boundaries of the mold cavity (34) and into a thermally bonded relationship with the transparent portion (42) of the mold cavity with said inner (46) and outer (56) lengths being spaced apart by a path length distance (100) and
— the first sealing arrangement (86) is arranged to join the inner (46) and outer (56) lengths together along an interface (88) that surrounds the deformed portion of the inner length (46) to define the reaction chamber (96) between the inner (46) and outer (56) lengths.

3. Analysis instrument according to claim 1 or 2, characterized by rotating means (112) for rotating the mold member (22) about an axis (VCL) of rotation to thereby accurately locate the reaction chamber (96) adjacent any predetermined angular position about the axis (VCL).

4. Analysis instrument according to anyone of claims 1 to 3, characterized in that temperature maintaining means (117) are mounted to the mold member (22) for maintaining the temperature thereof at a predetermined temperature level.

5. Analysis instrument according to anyone of claims 1 to 4, characterized in that said reaction monitoring device (132) is mounted for relative movement with respect to the mold member (22) and positionable adjacent to anyone of a predetermined number of locations on the mold member (22) having a reaction chamber (96) therein, said monitoring device (132) being operable to direct a beam of interrogating radiation through the transparent portion (42) of the cavity (34) of the mold member (22).

6. Analysis instrument according to anyone of claims 1 to 5, characterized in that the reagent dispensing arrangement (124) is mounted for relative movement with respect to the mold member (22), the dispensing arrangement (124) being positionable at any location about the periphery of the mold member (22).

7. Analysis instrument according to anyone of claims 5 and 6, characterized in that the reaction monitoring device (132) is disposed below the mold ring (22) while the dispensing arrangement (124) is disposed above the mold ring (22).

8. Analysis instrument according to anyone of claims 1 to 7, characterized in that the monitoring device (132) includes a source (138) of interrogating radiation disposed on one radial side of the reaction chamber (96) and a radiation responsive element (140) on the radially opposite side of the chamber (96).

9. Analysis instrument according to anyone of claims 1 to 8, characterized in that the dispensing arrangement (124) is mounted above the mold ring (22) and further comprises a reagent supply vessel (120) disposed on the upper surface of the ring (22).

10. Analysis instrument according to claim 9, characterized in that the reagent dispensing arrangement (124) includes a dispensing tube (127) which is movable radially inwardly and outwardly of the mold ring (22) to respectively communicate with the supply vessel (120) and the reaction chamber (96).

11. Analysis instrument according to claim 9 or 10, characterized in that the reagent supply vessel (120) contains passages (308) for the circulation of a cooling fluid therethrough.

12. Analysis instrument according to anyone of claims 3 to 11, characterized in that the rotating means comprises a capstan (112) connected to the lengths (46, 56) of plastic to draw the same onto the molded ring (22) and simultaneously to rotate the molded ring (22)

13. Analysis instrument according to anyone of claims 2 to 12, characterized in that the first sealing arrangement (86) comprises a shoe (68) with a hollow (70) having a pressure equalizing profile and, at the base of the hollow (70), an outlet aperture (74) for the air jet.

14. Analysis instrument according to anyone of claims 1 to 13, characterized in that a second sealing means (115) is provided for fully enclosing the reaction chamber (96) prefatory to discarding the same.

15. Analysis instrument according to anyone of claims 1 to 14, characterized in that each mold cavity (34) has a first and a second wall (38A, 38B) and means for tensioning the outer length of plastic material (56) are provided so that the outer (56) length of plastic material lies on a substantially straight line between the side walls of the mold cavity (34).

**Patentansprüche**

1. Analyseinstrument mit
— einer Probeneinführeinrichtung (116) zum Einführen von zu untersuchenden Proben in Reaktionskammern (96), die einstückig aus einem für eine Abfragestrahlung durchlässigen Material gebildet wird,
— einer Reagensausgabeanordnung (124) zum Ausgeben eines Reagens in die Reaktionskammern (96), und
— einer Reaktionsüberwachungsvorrichtung (132) zum Überwachen der Reaktion innerhalb einer Reaktionskammer (96) mittels Abfragestrahlung, gekennzeichnet durch
— ein bewegliches Formteil (22) mit mehreren Formhohlräumen (34), wobei ein Bereich (42) jedes Formhohlraumes (34) durch ein für die Abfragestrahlung durchlässiges und zur Überwachung einer Reaktion von der Abfragestrahlung durchdrungenes Material gebildet ist,
— Anordnungseinrichtungen (50, 60) zum Anordnen einer inneren (46) und einer äußeren (56) Bahn aus für die Abfragestrahlung durchlässigem Kunststoffmaterial über den Formhohlräumen (34),
— eine Verformungseinrichtung (66) zum Verformen der inneren Bahn (46) aus Kunststoffmaterial, das dabei in engen Kontakt mit den Begrenzungsflächen eines Hohlraumes (34) und einen Verbindungszustand mit dessen transparentem Bereich (42) gebracht wird, wobei die innere (46) und die äußere (56) Bahn aus Kunststoffmaterial in einem Abstand (100) zueinander angeordnet sind, der innerhalb einer vorbestimmten engen Toleranz eines vorbestimmten Abstandes liegt, und

— eine erste Versiegelungsanordnung (86) zum Verbinden der inneren (46) und der äußeren (56) Bahn miteinander, um zwischen diesen die Reaktionskammern (96) zu bilden.

2. Analyseinstrument nach Anspruch 1, dadurch gekennzeichnet, daß

— das Formteil aus einem Formring (22) besteht,

— die Anordnungsvorrichtungen (50, 60) derart angeordnet sind, daß sie eine innere (46) und eine äußere (56) Bahn aus Kunststoffmaterial einander überlagernd über den Formhohlraum (34) um einen vorbestimmten Bereich des Formrings (22) ziehen,

— die Verformungseinrichtung aus einer Luftstrahlanordnung (66) zum Richten eines Strahles erwärmter Luft auf die innere Bahn (46) besteht, um diese zu erweichen und zu einer Verformung bei enger Kontaktierung mit den Begrenzungsflächen des Formhohlkörpers (34) und thermischer Verbindung mit dem transparenten Bereich (42) des Formhohlraumes zu bringen, wobei die innere (46) und die äußere (56) Bahn voneinander um einen Abstand (100) beabstandet sind, und

— die erste Versiegelungsanordnung (86) derart angeordnet ist, daß sie die innere (46) und die äußere (56) Bahn entlang einer den verformten Bereich der inneren Bahn (46) umgebenden Berührungsfläche (88) miteinander verbindet, um die Reaktionskammer (96) zwischen der inneren (46) und der äußeren (56) Bahn zu bilden.

3. Analyseinstrument nach Anspruch 1 oder 2, gekennzeichnet durch Dreheinrichtungen (112) zum Drehen des Formteiles (22) um eine Drehachse (VCL), um so die Reaktionskammer (96) genau an jeder beliebigen Winkelposition um die Achse (VCL) positionieren zu können.

4. Analyseinstrument nach einem der Ansprüche 1 bis 3, dadurch gekennzeichnet, daß eine Einrichtung (117) zur Aufrechterhaltung der Temperatur an dem Formteil (22) angebracht ist, um dessen Temperatur auf einem vorbestimmten Temperaturniveau zu halten.

5. Analyseinstrument nach einem der Ansprüche 1 bis 4, dadurch gekennzeichnet, daß die Reaktionsüberwachungsvorrichtung (132) zur Bewegung relativ Formteil (22) angebracht ist und an jede beliebige vorbestimmte Anzahl von mit einer Reaktionskammer (96) versehenen Stellen am Formteil (22) positionierbar ist, wobei die Reaktionsüberwachungsvorrichtung (132) zum Richten eines Abfragestrahlungsstrahls durch den transparenten Teil (42) des Hohlraumes (34) des Formteiles (22) betreibbar ist.

6. Analyseinstrument nach einem der Ansprüche 1 bis 5, dadurch gekennzeichnet, daß die Reagensausgabeanordnung (124) zur Bewegung relativ zum Formteil (22) angebracht ist, wobei die Reagensausgabeanordnung (124) in jede beliebige Position am Außenrand des Formteils (22) positionierbar ist.

7. Analyseinstrument nach einem der Ansprüche 5 und 6, dadurch gekennzeichnet, daß die Reaktionsüberwachungsvorrichtung (132) unterhalb des Formrings (22) angeordnet ist, während die Ausgabeanordnung (124) oberhalb des Formrings (22) angeordnet ist.

8. Analyseinstrument nach einem der Ansprüche 1 bis 7, dadurch gekennzeichnet, daß die Überwachungsvorrichtung (132) eine Abfragestrahlungsquelle (138), die auf einer radialen Seite der Reaktionskammer (96) angeordnet ist, und ein strahlungsempfindliches Element (140) auf der radial gegenüberliegenden Seite der Kammer (96) aufweist.

9. Analyseinstrument nach einem der Ansprüche 1 bis 8, dadurch gekennzeichnet, daß die Ausgabeanordnung (124) oberhalb des Formrings (22) angebracht ist und ferner ein Reagensvorratsgefäß (120) aufweist, das an der Oberseite des Rings (22) angeordnet ist.

10. Analyseinstrument nach Anspruch 9, dadurch gekennzeichnet, daß die Reagensausgabeanordnung (124) ein Ausgaberohr (127) aufweist, das radial einwärts und auswärts des Formringes (22) bewegbar ist, um jeweils mit dem Vorratsgefäß (120) oder der Reaktionskammer (96) in Verbindung zu stehen.

11. Analyseinstrument nach Anspruch 9 oder 10, dadurch gekennzeichnet, daß das Reagensvorratsgefäß (120) Durchlässe (308) für die Zirkulation einer Kühlflüssigkeit durch diese aufweist.

12. Analyseinstrument nach einem der Ansprüche 3 bis 11, dadurch gekennzeichnet, daß die Dreheinrichtung ein mit den Kunststoffbahnen (46, 56) verbundenes Rad (112) aufweist, das diese auf den Formring (22) aufzieht und den Formring (22) gleichzeitig dreht.

13. Analyseinstrument nach einem der Ansprüche 2 bis 12, dadurch gekennzeichnet, daß die erste Versiegelungsvorrichtung (86) einen mit einem Hohlraum (70) versehenen Schuh (68) aufweist, der ein den Druck vergleichmäßigendes Profil hat und an der Basis des Hohlraums (70) eine Auslaßöffnung (74) für den Luftstrahl aufweist.

14. Analyseinstrument nach einem der Ansprüche 1 bis 13, dadurch gekennzeichnet, daß eine zweite Versiegelungseinrichtung (115) zur vollständiigen Umschließung der Reaktionskammer (96) vor deren Entsorgung vorgesehen ist.

15. Analyseinstrument nach einem der Ansprüche 1 bis 14, dadurch gekennzeichnet, daß jeder Formhohlraum (34) eine erste und eine zweite Wand (38A, 38B) aufweist und daß eine Einrichtung zum Spannen der äußeren Kunstoffbahn (56) vorgesehen ist, so daß die äußere Kunstoffbahn (56) in einer im wesentlichen geraden Linie zwischen den Seitenwänden des Formhohlraumes (34) liegt.

**Revendications**

1. Instrument d'analyse comprenant:

— des moyens d'introduction d'échantillon (116) pour introduire des échantillons à essayer dans des chambres de réaction (96) formées d'un seul tenant à partir d'un matériau transparent pour une radiation interrogative,

— un agencement de distribution de réactif (124) pour distribuer un réactif dans les chambres de réaction (96), et

— un dispositif de surveillance de réaction (132) pour surveiller la réaction à l'intérieur d'une chambre de réaction (96) au moyen de la radiation interrogative, caractérisé par:

— un élément de moulage mobile (22) présentant une pluralité de cavités de moulage (34), une zone (42) de chaque cavité de moulage (34) étant délimitée par un matériau transparent à la radiation interrogative et traversée par la radiation interrogative pour surveiller une réaction,

— des moyens de positionnement (50, 60) pour disposer sur les cavités de moulage (34) une longueur interne (46) et une longueur externe (56) de matière plastique transparente pour la radiation interrogative,

— des moyens de déformation (66) pour déformer la longueur interne (46) de matière plastique en l'amenant en contact étroit avec les limites d'une cavité de moulage (34) et en relation de liaison avec la zone transparente (42) de celle-ci, les longueurs interne (46) et externe (56) de ladite matière plastique étant espacées l'une de l'autre d'une distance (100) se situant à l'intérieur d'une tolérance étroite et prédéterminée par rapport à une distance prédéterminée, et

— un premier agencement de soudure (86) pour réunir les longueurs interne (46) et externe (56) afin de définir les chambres de réaction (96) entre elles.

2. Instrument d'analyse selon la revendication 1, caractérisé en ce que:

— l'élément de moulage est constitué d'un anneau de moulage (22),

— les moyens de positionnement (50, 60) sont agencés pour transférer une longueur interne (46) et une longueur externe (56) de matière plastique en relation de superposition sur la cavité de moulage (34) d'une zone prédéterminée de l'anneau de moulage (22),

— les moyens de déformation sont constitués d'un agencement à jet d'air (66) pour diriger un jet d'air chauffé sur la longueur interne (46) pour ramollir celles-ci et provoquer leur déformation en contact étroit avec les limites de la cavité de moulage (34) et en relation de liaison thermique avec la zone transparente (42) de la cavité de moulage, lesdites longueurs interne (46) et externe (56) étant espacées l'une de l'autre sur une longueur de traversée (100), et

— le premier agencement de soudage (86) est agencé pour réunir les longueurs interne (46) et externe (56) sur une interface (86) qui entoure la zone déformée de la longueur interne (46) afin de définir la chambre de réaction (96) entre les longueurs interne (46) et externe (56).

3. Instrument d'analyse selon la revendication 1 ou 2, caractérisé par des moyens de rotation (112) pour faire pivoter l'élément de moulage (22) autour d'un axe (VCL) de rotation afin d'amener ainsi de façon précise la chambre de réaction (96) dans toute position adjacente à une position angulaire prédéterminée autour de l'axe (VCL).

4. Instrument d'analyse selon l'une quelconque des revendications 1 à 3, caractérisé en ce que des moyens de maintien de la température (117) sont montés sur l'élément de moulage (22) pour maintenir la température de celui-ci à un niveau prédéterminé de température.

5. Instrument d'analyse selon l'une quelconque des revendications 1 à 4, caractérisé en ce que ledit dispositif de surveillance de réaction (132) est monté de façon à pouvoir se déplacer par rapport à l'élément de moulage (22) et peut être positionné adjacent à une quelconque d'un nombre prédéterminé d'emplacements sur l'élément de moulage (22) contenant une chambre de réaction (96), ledit dispositif de surveillance (132) pouvant être mis en oeuvre pour diriger un faisceau de radiation interrogative à travers la partie transparente (42) de la cavité (34) de l'élément de moulage (22).

6. Instrument d'analyse selon l'une quelconque des revendications 1 à 5, caractérisé en ce que l'agencement de distribution de réactif (124) est monté de façon à pouvoir se déplacer par rapport à l'élément de moulage (22), cet agencement de distribution (124) pouvant être positionné en un emplacement quelconque sur la périphérie de l'élément de moulage (22).

7. Instrument d'analyse selon l'une quelconque des revendications 5 et 6, caractérisé en ce que le dispositif de surveillance de réaction (132) est disposé au-dessous de l'anneau de moulage (22) alors que l'agencement de distribution (124) est disposé au-dessus de l'anneau (22).

8. Instrument d'analyse selon l'une quelconque des revendications 1 à 7, caractérisé en ce que le dispositif de surveillance (132) comprend une source (138) de radiation interrogative, disposée sur un côté radial de la chambre de réaction (96) et un élément sensible aux radiations (140) sur le côté radialement opposé de la chambre (96).

9. Instrument d'analyse selon l'une quelconque des revendications 1 à 8, caractérisé en ce que l'agencement de distribution (124) est monté au-dessus de l'anneau de moulage (22) et comprend en outre un récipient d'alimentation en réactif (120) disposé sur la surface supérieure de l'anneau (22).

10. Instrument d'analyse selon la revendication 9, caractérisé en ce que l'agencement de distribution de réaction (124) comprend un tube distributeur (127) qui est susceptible de se déplacer radialement vers l'intérieur et vers l'extérieur de l'anneau de moulage (22) pour communiquer respectivement avec le conteneur d'alimentation (120) et la chambre de réaction (96).

11. Instrument d'analyse selon la revendication 9 ou 10, caractérisé en ce que le conteneur d'alimentation en réactif (120) contient des passages (308) pour la circulation d'un fluide de refroidissement à travers lui.

12. Instrument d'analyse selon l'une quelconque des revendications 3 à 11, caractérisé en ce que les moyens de rotation comprennent un cabestan (112) connecté aux longueurs (46, 56) de plastique pour transférer celles-ci sur l'anneau de moulage (22) et faire pivoter simultanément l'anneau de moulage (22).

13. Instrument d'analyse selon l'une quelconque des revendications 2 à 12, caractérisé en ce que le premier agencement de soudage (86) comprend un patin (68) avec un creux (70) ayant un profil d'égalisation de pression et, à la base du creux (70), une ouverture de sortie (74) pour le jet d'air.

14. Instrument d'analyse selon l'une quelconque des revendications 1 à 13, caractérisé en ce qu'un second moyen de soudage (115) est prévu pour fermer complètement la chambre de réaction (96) préliminairement à la mise de celle-ci à la décharge.

15. Instrument d'analyse selon l'une quelconque des revendications 1 à 14, caractérisé en ce que chaque cavité de moulage (34) présente une première et une seconde parois (38A, 38B) et des moyens pour mettre sous tension la longueur externe en matière plastique (56) sont prévus de façon que la longueur externe (56) de matière plastique se situe sur une ligne pratiquement droite entre les parois latérales de la cavité de moulage (34).

# Fig. 1

Fig. 2

Fig. 3

# *Fig. 4*

# *Fig. 7*

# *Fig. 8*

3

Fig. 5

Fig. 9

Fig. 11

Fig. 10

Fig. 6